Europäisches Patentamt

(19) European Patent Office

Office européen des brevets

(11) EP 0 512 730 B1

(12) EUROPEAN PATENT SPECIFICATION

(45) Date of publication and mention
of the grant of the patent:
**21.02.1996 Bulletin 1996/08**

(51) Int. Cl.⁶: **B29C 47/76**, B29C 47/40,
B29C 47/50, C08L 83/04
// B29K83/00

(21) Application number: **92303802.0**

(22) Date of filing: **28.04.1992**

(54) **Manufacture of moisture curable organosiloxane compositions**

Herstellung von feuchtigkeitshärtenden Organosiloxanzusammensetzungen

Fabrication de compositions de organosiloxanes durcissables par l'humidité

(84) Designated Contracting States:
**DE FR GB NL**

(30) Priority: **06.05.1991 US 695882**

(43) Date of publication of application:
**11.11.1992 Bulletin 1992/46**

(73) Proprietor: **DOW CORNING S.A.**
**B-7180 Seneffe (BE)**
Designated Contracting States:
**DE FR GB NL**

(72) Inventors:
• **Brangers, George D.**
**Elizabethtown, Kentucky 42701 (US)**
• **Winter, Charles Bruce**
**Midland, Michigan (US)**
• **Mesa-Forero, Carlos**
**B-1180 Brussels (BE)**
• **Ulzheimer, Rudi**
**W-6270 Idstein-Eschenhahn (DE)**

(74) Representative: **Bullows, Michael**
**Barry, South Glamorgan CF63 7YL, Wales (GB)**

(56) References cited:
EP-A- 0 088 541        EP-A- 0 234 226
EP-A- 0 343 280        DE-B- 1 268 356
NL-A- 6 617 363        NL-A- 6 806 477
US-A- 2 836 851        US-A- 3 960 802
US-A- 4 528 324

Note: Within nine months from the publication of the mention of the grant of the European patent, any person may give notice to the European Patent Office of opposition to the European patent granted. Notice of opposition shall be filed in a written reasoned statement. It shall not be deemed to have been filed until the opposition fee has been paid. (Art. 99(1) European Patent Convention).

## Description

This invention is concerned with improvements in or relating to the manufacture of moisture curable organosiloxane compositions.

Moisture curable organosiloxane compositions are known. These compositions find use in various applications, for example as sealant compositions which can be applied to a joint between elements and cured to provide an elastomeric seal between them. These compositions cure at room temperature and are particularly attractive for use as sealant compositions for sealing, for example highway joints, joints in articles for example vehicle headlights and joints in buildings and in glazing applications, in view of the fact that no special heating or other cure conditions are generally required to produce a seal of desired quality.

Many moisture curable organosiloxane compositions have been proposed and are generally formed from an at least one substantially linear polyorganosiloxane containing at least two silanol groups, a crosslinker capable of reaction with the polyorganosiloxane to yield a crosslinked network, and catalyst materials. These compositions cure by a condensation reaction promoted by moisture.

The crosslinker in moisture curable organosiloxane compositions is generally selected from polyfunctional silanes which readily hydrolyze, those commonly employed being triacetoxy silanes, trialkoxy silanes, triamino silanes and trioximo silanes. It is believed that the condensation reaction proceeds via a capping of the polyorganosiloxane with, for example, dialkoxyalkylsilyl groups followed by interaction of the alkoxy groups of the end caps and or silanol groups to yield a crosslinked structure.

While some curing of the composition during manufacture and storage is acceptable, it is important that this curing does not proceed too far prior to application at its intended work site at which it is intended to cure under influence of atmospheric moisture. Thus it is important that exposure of the composition to moisture is kept to a uniform, acceptably low extent from batch to batch during manufacture and storage, otherwise the composition cures to an extent which renders it impractical for its intended purpose.

Moisture curable compositions based on organosilicon compounds generally contain finely divided fillers. The fillers generally used are those which strengthen the cured material, reduce the cost of the product or otherwise confer a desired combination of properties.

Typical fillers include but are not limited to high surface area silicas, ground quartz, iron oxide, zinc oxide, carbon black, calcium carbonate and diatomaceous earth.

Moisture curable organosiloxane compositions can be manufactured using a batch process during which the filler and polyorganosiloxane are mixed together, the crosslinker and catalyst are added to the mixture and the resultant composition is then packaged in containers such as cartridges, which are then sealed in an airtight manner to prevent ingress of moisture.

A continuous process for preparing moisture curable organosiloxane compositions using a devolatilizing extruder is described in United States Patent No. 3,960,802 which issued to Beers et al. on 1st June, 1976. The ingredients of the composition comprise a silanol terminated polydiorganosiloxane, a crosslinking silane and a silanol-reactive organometallic ester compound of a metal and an optional filler. This patent mentions a twin screw Werner-Pfliederer mixer Model 2SK as a preferred devolatilizing extruder.

U.S. Patent No. 4,528,324 which issued to Chung et al. on 9th July, 1985 describes further developments in a continuous process for preparing moisture curable organosiloxane compositions using a devolatilizing extruder. Chung et al. teach using a catalyst for the end-capping reaction of the polydiorganosiloxane together with an optional scavenger to react with free silanol groups.

Recycling a major portion of a rubber composition from one section of an extruder through an annular chamber back to a previous section of the extruder to increase the time during which the composition is exposed to the masticating action of the screws in the extruder is taught in United States Patent No. 4,897,236, which issued to Rabiger et al. on 30th January, 1990.

Among the various crosslinkers which have been proposed for moisture curable organosiloxane compositions the alkoxysilanes are particularly attractive because by-products of the condensation are neither acidic nor alkaline, so that generally they do not cause corrosion of substrates with which the curing material comes in contact. However, the alkoxysilanes yield alcohol as a by-product of the condensation reaction and while this is generally acceptable when the composition is used under well vented conditions, escape of the alcohol during manufacture of the composition is regarded as undesirable.

Attempts to prepare moisture curable organosiloxane using trialkoxysilanes as the crosslinker by mixing the ingredients in a twin screw extruder have revealed difficulties due to the need for the composition to remain resident in the extruder for sufficient time to permit that part of the cure in which end-capping of the polymer occurs to proceed to a desired extent and adequate venting of water and by-product from the composition prior to exit of the composition from the extruder. While these requirements may be met by use of an extruder of sufficient length or by linking two or more extruders in series, this is undesirable on a cost basis.

The present inventors have discovered that moisture curable compositions can be prepared on a commercial scale and in a continuous fashion using a devolatilizing extruder of the twin screw type of comparatively short length if the composition is fed through a residence zone prior to final processing. In contrast to the recycling chamber used in prior art extruders, such as the one described in the aforementioned patent to Rabiger et al.

where the objective is recycling of a major portion of the material being processed, the overall direction of material flow in the residence zone of the present invention is the same as the flow of material in the barrel of the extruder, with the result that the material in the residence zone re-enters the barrel of the extruder downstream relative to the location from which it entered the residence zone.

The invention provides in one of its aspects a process for the continuous preparation of a moisture curable composition by passing materials comprising at least one silanol terminated polyorganosiloxane containing at least two silanol groups per molecule, one or more silane crosslinker and a catalyst for the curing reaction into a screw extruder and extruding the composition into storage containers characterized by the steps of

1) continuously introducing the said materials into a first mixing zone of the screw-extruder, to form a mixture

2) subjecting the mixture to the mixing and transporting action of the screw of the screw-extruder in said first mixing zone for a period of time to effect blending the ingredients of said mixture to homogeneity, and wherein excess water is removed,

3) transporting said mixture from said first mixing zone through a residence zone in which the mixture is not subjected to the mixing action of said screw, in which residence zone said mixture is permitted to react for a period of time, and

4) transporting said mixture from said residence zone through a second mixing zone of said extruder located downstream relative to said first mixing zone, wherein volatile materials are removed from the mixture to form said composition.

The screw-extruder device used in a process according to the invention is an essentially closed apparatus and is preferably of the continuous kneader mixer type which has a barrel comprising a first mixing zone containing one or more entry ports through which ingredients of the moisture curable organosiloxane composition can be supplied into the barrel and a second mixing zone containing vent means through which volatile components can leave the barrel. The barrel houses a screw device which is rotatable in the barrel and has screw flights arranged to mix ingredients supplied to the barrel and to transport the mixture through the barrel.

The screw device may comprise a single screw or a multiple screw and may be reciprocable or not in the barrel. Multiple screw-extruders are preferred. Most preferred are twin screw-extruders having two, fully intermeshing, co-rotating screws installed parallel to each other in the barrel, entry ports for feed streams and vents provided towards the exit end of the device. The screws may be single flight or double flight. If desired two or more screw-extruder devices of the same or different types may be connected together, for example in-line. If desired selected sections of the screw-extruder device may be heated or cooled.

For a given screw configuration the rate of screw rotation determines the degree of mastication of the mixture and the rate at which the mixture of ingredients travels through the extruder, and is chosen so that mixing to homogeneity is achieved in the shortest possible time.

Passage of the mixture of ingredients from the first mixing zone of the extruder through the essentially closed residence zone permits a certain maturing of the ingredients to form a moisture curable organosiloxane composition, accompanied by generation of by-products which pass with the mixture through the residence zone.

After passing through the residence zone the mixture of ingredients re-enters the extruder in a second mixing zone located downstream with respect to the first mixing zone. While in the second mixing zone the mixture is subjected to final processing for extraction of volatile materials to form a moisture curable organosiloxane composition that is dispensed into storage containers, for example cartridges or drums.

The residence zone of the present extruder is preferably in the form of a tubular chamber located outside of the barrel. The tube connects the first mixing zone of the barrel with a second mixing zone located "downstream" relative to first mixing zone of the extruder that contains the entry ports through which the reactive ingredients are introduced to the barrel.

The mixture of ingredients can be urged through the residence zone using only the pressure of the following mixed composition propelled by the screw-device or, if desired, pump means may be provided to assist the flow. If desired, a static mixing device can be placed in the residence zone. The present inventors have found that mixtures remaining in the residence zone for a period of the order of about 4 to 15 minutes show a desirable degree of processing.

Organosiloxane compositions for use in the present method include at least one silanol-terminated polyorganosiloxane containing at least two silanol groups per molecule. The polyorganosiloxane can be linear or branched but is preferably an at least substantially linear $\alpha,w$-dihydroxypolysiloxane represented by the general formula $HO(R_2SiO)_xH$ wherein each R represents a saturated or unsaturated hydrocarbon radical containing up to 12 carbon atoms that can be substituted or unsubstituted. Examples of such hydrocarbon radicals are aliphatic radicals, especially the methyl group. The viscosity of the polyorganosiloxane is from 30 to 1000 Pa.s (300 to 10,000 poise). The polyorganosiloxane may include branching units according to the formula $R_aSiO_{(4-a)}$ wherein R is as defined hereinabove and the value of $\underline{a}$ is 0 or 1, but this is generally not preferred. Polyorganosiloxanes and methods for preparing these polymers are well known. These polymers are usually made by the addition of diorganodichlorosilanes to a water/solvent mixture to yield a mixture of low molecular weight silanol-terminated oligomers and cyclic siloxanes in solvent. Linear $\alpha,w$-dihydroxy polydiorganosiloxanes of desired molecular weight can be manufactured from the low molecular weight linear $\alpha$,w-dihydroxy polydiorganosiloxane oligomers produced as described in the preceding section of this specification or by a process involving ring opening of the cyclic materials referred using condensation and equilibration in presence of a basic or an acidic catalyst. In preferred polydiorganosiloxanes materials at least 85% and preferably all of the R groups are methyl.

Organosiloxane compositions for use in a process according to the invention also include a crosslinking agent which is, for example, a silane of the formula $R'_aR''_bSi$ or a siloxane having units $R'_aR''_cSiO_{[4-(a+c)]}$ wherein each $R'$ represents a monovalent hydrocarbon radical, each $R''$ represents an hydroxy, alkoxy, alkoxyalkoxy or oximo group, $\underline{a} + \underline{b} = 4$, $\underline{a}$ has a value 0 or 1, $\underline{b}$ has a value 3 or 4 and $\underline{c}$ has a value 2 or 3.

Crosslinking agents which can be used include but are not limited to the known moisture vapor activated crosslinkers which employ alkoxy or alkoxyalkyl substituted silanes as exemplified by methyltrimethoxysilane. These crosslinking agents serve to form a mixture and/or a reaction product of the silanol-terminated polyorgano siloxane with a compound containing silicon-bonded groups which are reactive with, or become reactive with, (e.g. under influence of atmospheric moisture) the silicon-bonded hydroxyl groups of the polyorganosiloxane.

The present organosiloxane compositions also comprise a catalyst for the curing reaction which takes place in presence of moisture. Catalysts which can be employed include the known titanium compound catalysts, including certain alkyl titanate salts and alkyltitanium esters for example tetraisobutyl titanate and tetraisopropyl titanate.

The present compositions may, and preferably do, contain at least one finely divided filler of the type generally recommended for use in moisture curable silicone compositions, for example ferric oxide, diatomaceous earth, alumina, hydrated alumina, titanium oxide, glass micro-balloons, organic fillers or resins, crushed quartz, calcium sulphate, oxides, hydroxides, carbonates or bicarbonates of calcium, magnesium, barium or zinc, barium sulphate and precipitated or fumed silicas or mixtures thereof. The commercially available calcium carbonates may be used, and surface treated materials are preferred, for example those which have been surface coated with an aliphatic, araliphatic or other acid or salt, for example stearic or dodecylbenzene sulphonic acid.

Inclusion of larger proportions of certain silicas and carbonates dramatically affects flowability of the composition, which is reflected in processing characteristics and particularly in difficulty of mixing the composition. The filler employed and the proportion used also influences other properties of the composition. The adhesion properties of silicone sealants are generally augmented when necessary by use of primers on the surfaces to be sealed or by inclusion of adhesion promoters in the composition.

The present compositions, particularly those which use higher proportions of filler, may include a plasticizer, for example a non-reactive silicone fluid or gum such as a trialkylsilyl end-blocked polydiorganosiloxane, or an organic diluent, for example an aromatic petroleum hydrocarbon such as petroleum naphtha or a polyether. One may also include in a composition for use in the present invention the usual optional additives, for example colorants, antioxidants, liquid extenders, for example polydimethylsiloxane fluids, flow control agents and adhesion promoters, for example gamma-aminopropyltrimethoxysilane.

In carrying out a process according to the invention, the ingredients may be introduced to the barrel of the screw-extruder device in any convenient order and the ingredients may be fed to the barrel singly or in admixture with some or all of another ingredient, and may be fed in a single stream or in several streams. For example, in one process exemplified in this specification a first feed stream comprises hydroxy terminated polydimethylsiloxane, a second feed stream consists essentially of finely divided calcium carbonate, a third feed stream consists essentially of a liquid flow control agent, a fourth stream contains a trimethylsilyl-terminated polydimethylsiloxane and a silanol-terminated polydimethylsiloxane, and a fifth feed stream consists essentially of a mixture of the cross linking material, catalyst and adhesion promoter.

It is necessary to remove excess water from the ingredients before the crosslinking agent is introduced to the mixture, and this is preferably done through one or more vents of the extruder located "upstream" (relative to the direction of flow of the mixture through the extruder barrel) from the port through which the crosslinker and catalyst are introduced to the mixture in the extruder. Colorants and minor additives may be added to the mixture at any desired stage and this is preferably done as near the end of the mixing procedure as possible.

The composition may then be extruded and charged into cartridges or drums.

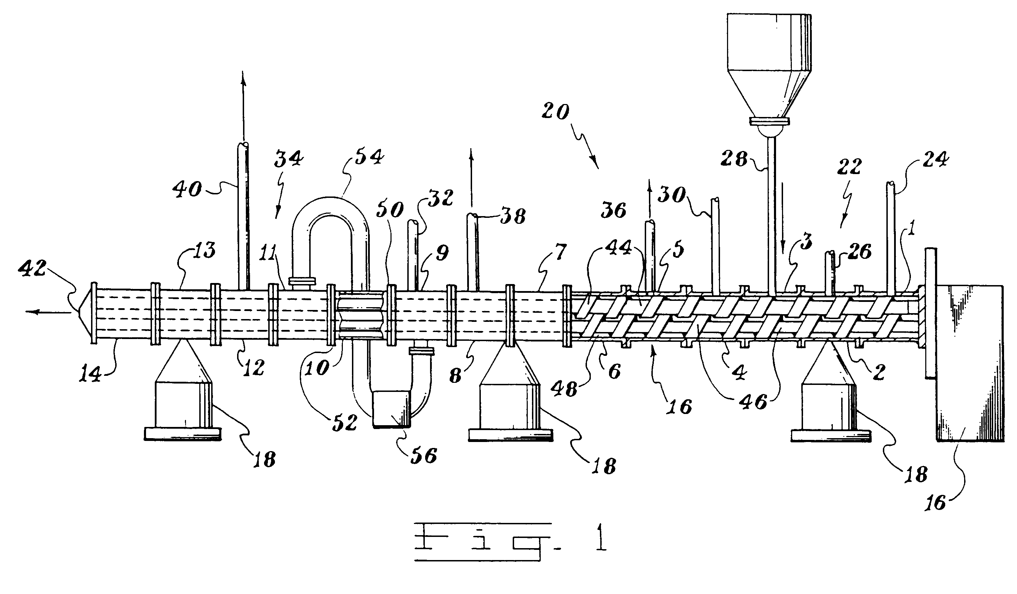

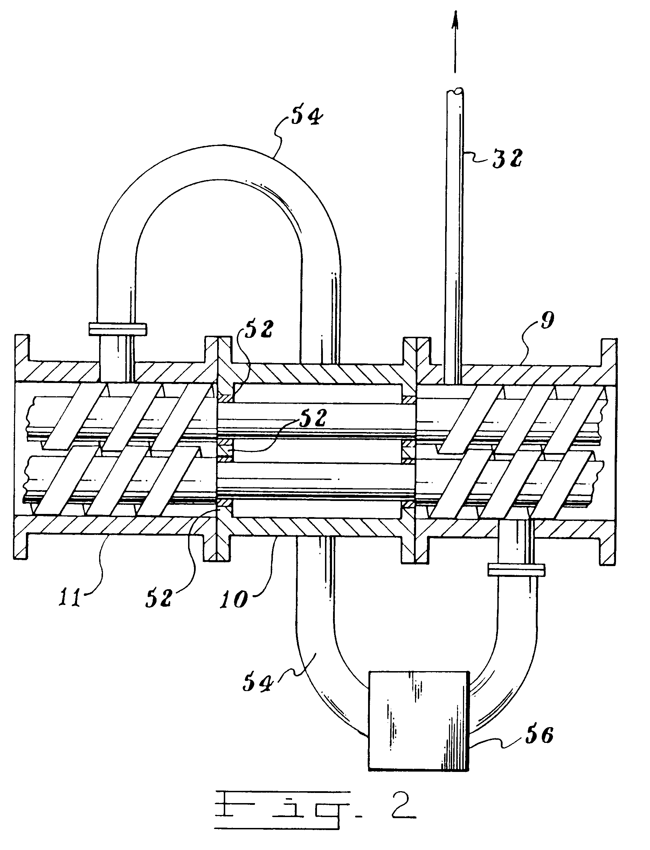

The invention provides in another of its aspects a modified devolatilizing extruder suitable for use in the continuous production of moisture curable organosiloxane composition in accordance with the present method. A preferred embodiment of the modified devolatilizing extruder of the present invention is depicted in Figures 1 and 2 of the accompanying drawings.

Figure 1 is a diagrammatic side elevation, partly in cross section, of a screw extruder device of the present invention and Figure 2 is a diagrammatic plan view, partly in cross section of a portion of the device showing a preferred type of residence zone.

The extruder comprises a barrel containing fourteen sections (1-14) and equipped with suitable support means (16 and 18) and a screw device (20). Sections 1-9 of the barrel constitute a first mixing zone (22) and contain a number of entry ports (24, 26, 28, 30, and 32) through which the ingredients of the moisture curable composition enter the barrel of the extruder and two vents (36 and 38).

Sections 11-14 of the barrel constitute a second mixing zone (34) and contain a vent (40) through which volatile materials can leave the barrel and an exit orifice (42) through which the final moisture curable composition is extruded from the barrel. Vents (36) and (38) are located in the first mixing section to remove any excess water prior to addition of the crosslinking agent and catalyst.

The barrel contains two screws (44 and 46) with single or double helical flights. Means (not shown) are provided for circulating cooling or heating fluid through the extruder from the support (16).

The configuration of the mixing chamber (48) within the barrel conforms closely to the external diameters of the screw flights. The screws are driven by a motor located in the support section (16) of the extruder. The screws are double flight and are journaled for rotation in the mixing chamber (46).

The screws are arranged so that the rotating screw flights mix ingredients supplied to the mixing zone through the ports (24, 26, 28, 30 and 32) and transport the resultant mixture through the mixing zone in the direction of exit orifice (42) and as far as a wall (50) separating sections 9 an 10 of the extruder barrel. A second wall (52) separates section 10 of the extruder barrel from section 11.

Upon arriving at wall (50) the material in the mixing zone is forced to leave the barrel of the extruder and travel through a residence zone (54). After travelling through the residence zone the material re-enters the barrel of the extruder at section 11, which is isolated from section 10 by means of a second wall (52) and is transported by the action of the screws to the exit orifice (42). The residence zone provides the only conduit for material passing between the first and second mixing zones of the extruder barrel.

The sections of each screw adjacent to wall (50) and extending through this wall have flights pitched in the opposite direction from the flight along the remainder of the screw, and act to impede the flow of material through this section of the barrel. Wall (50) and the reverse thrust of the screw co-operate to check the flow of material along the barrel and provide a barrier between sections (10) and (11) of the extruder.

Pumping means (56) is provided to assist the flow of material through the residence zone (54). The pressure of material being propelled by the screw device in sections 1-9 of the barrel and the pumping means co-operate in urging the flow of material in the residence zone.

Example

Using the extruder shown in the accompanying drawings a curable composition was prepared in accordance with the present method by introducing streams of ingredients through one or more of the entry ports (24), (26), (28), (30) and (32). The types and amounts, in parts by weight, of ingredients were: 100 parts of a hydroxyl-terminated polydimethylsiloxane having a viscosity of about 50 Pa.s at 25°C and a hydroxyl content of 0.057 weight percent, 20 parts of a trimethylsilyl terminated polydimethylsiloxane having a viscosity of 100 centistokes, 125 parts of a finely divided filler comprising a mixture of 80 parts of a high surface area stearate coated precipitated calcium carbonate having a surface area of 20 m²/g. and 25 parts low surface area stearate coated ground calcium carbonate having a surface area of 1 to 2 m²/g, 6 parts of methyltrimethoxysilane, 2 parts of di(isopropyl)di(ethylacetoacetate) titanate catalyst, 0.2 part of N-aminoethyl-gamma-aminopropyltrimethoxysilane and 1.03 parts of dodecylbenzene sulphonic acid. A first stream was introduced through the port (24) and comprised a portion of the hydroxy-terminated polydimethylsiloxane. A second feed stream was introduced through port (26) and comprised the finely divided filler mixture, a third feed stream was introduced through the port (28) and comprised the dodecylbenzene sulphonic acid, a fourth feed stream was introduced through the port (30) and comprised the trimethylsilyl-terminated polydimethylsiloxane and the balance of the hydroxy-terminated polydimethylsiloxane, and a fifth feed stream was introduced through the port 32 and comprised a mixture of the crosslinking material, the catalyst and the adhesion promoter.

Excess water and other volatile materials were removed from the mixture in the zone via the vents (36) and (38) before introduction of the crosslinking agent to the mixture via port (32).

In carrying out the illustrative process the rate of rotation of the screws determines the mastication of the mixture and the rate at which composition is transported through the barrel, and is chosen so that mixing to homogeneity is achieved in the shortest possible time. The passage of the composition through the residence zone permits a certain maturing of the composition to the form in which it is to be packaged, accompanied by generation of by-products.

After the required passage through the residence zone the composition is subjected to final mastication by the screws and volatile materials are extracted via the vent (40). The composition is then dispensed from the zone via the exit orifice (42) into storage containers for example cartridges or drums.

The apparatus was arranged so that the mixed composition was resident in the first mixing zone (22) for a period of about 1 to 2 minutes, in the residence zone (54) for a period of about 10 minutes and in the second mixing zone (34) for about 0.1 to 0.3 minute.

Samples of the moisture curable organosiloxane composition dispensed from the exit nozzle were stored for one week at room temperature in sealed cartridges. Each sample was tested for physical properties and adhesion and found to be very similar to the other samples and to provide an acceptable room temperature curable sealant composition.

## Claims

1. A process for the continuous preparation of a moisture curable composition by passing materials comprising at least one silanol terminated polyorganosiloxane containing at least two silanol groups per molecule, one or more silane crosslinker and a catalyst for the curing reaction into a screw extruder and extruding the composition into storage containers characterised by the steps of

   1) continuously introducing the said materials into a first mixing zone of the screw-extruder, to form a mixture
   2) subjecting the mixture to the mixing and transporting action of the screw of the screw-extruder in said first mixing zone for a period of time to effect blending the ingredients of said mixture to homogeneity, and wherein excess water is removed,
   3) transporting said mixture from said first mixing zone through a residence zone in which the mixture is not subjected to the mixing action of said screw, in which residence zone said mixture is permitted to react for a period of time, and
   4) transporting said mixture from said residence zone through a second mixing zone of said extruder located downstream relative to said first mixing zone, wherein volatile materials are removed from the mixture to form said composition.

2. A process according to Claim 1 further characterised in that the residence time of said mixture in said first mixing zone is from 1 to 2 minutes, and/or the residence time of said mixture in said residence zone is from 4 to 15 minutes, and/or the residence time of said mixture in said second mixing zone is from 0.1 to 0.3 minute.

3. A process according to Claim 1 further characterised in that the silanol-terminated organosiloxane is of the general formula $HO(R_2SiO)_xH$ wherein each R represents a hydrocarbon group having up to 12 carbon atoms and $\underline{x}$ has a value such that the polyorganosiloxane has a viscosity in the range 30 to 1000 poise, the crosslinker is a silane of the formula $R'_aR''_bSi$ wherein each $R'$ represents a monovalent hydrocarbon group, each $R''$ represents an hydroxy, alkoxy, alkoxyalkoxy or oximo group, $\underline{a} + \underline{b} = 4$, $\underline{a}$ has a value 0 or 1 and $\underline{b}$ has a value 3 or 4.

4. A process according to Claim 1 further characterised in that the materials of the composition are supplied to the screw-extruder device in several streams singly or in admixture with other ingredients of the composition.

5. A process according to Claim 4 further characterised in that a first feed stream comprises a silanol-terminated polydimethylsiloxane, a second feed stream comprises finely divided calcium carbonate, a third feed stream comprises a liquid flow control agent, a fourth feed stream comprises a plasticizer and said silanol-terminated polydimethylsiloxane and a fifth feed stream comprises the curing agent, catalyst and adhesion promoter.

6. A devolatilizing extruder suitable for the continuous production of a moisture curable organosiloxane composition, said extruder comprising a barrel having first and second mixing zones (22, 34), where said first mixing zone (22) contains at least one entry port (24, 26, 28, 30, 32) through which ingredients of the composition are supplied into the barrel and at least one vent means (36, 38) for removal of excess water, said second mixing zone (34) is located downstream with respect to said first mixing zone (22), contains vent means (40) through which volatile components can leave said barrel and an exit orifice (42) through which the composition is extruded from the barrel, the barrel contains a screw device (44, 46) which is rotatable within the barrel and has screw flights arranged to mix ingredients supplied to the barrel and to transport the mixture through the barrel characterised in that the extruder is provided with a residence zone (54) that is external to said barrel and provides the only conduit for transporting the ingredients of said composition from said first (22) to said second (34) mixing zones, whereby said ingredients are transported through the residence zone (54) to said second mixing zone (34) for extrusion therefrom by means of said screw device (44, 46).

7. Apparatus according to Claim 6 further characterised in that the screw device (44, 46) comprises a twin screw having two fully intermeshing co-rotating screws installed parallel to each other in the barrel.

8. Apparatus according to Claim 6 further characterised in that the residence zone (54) comprises a tube communicating with the interior of the barrel and connecting said first mixing zone (22) with second mixing zone (34) upstream relative to said vent means (40) in said second mixing zone (34).

9. Apparatus according to Claim 6 further comprising pump means (56) for assisting flow of composition through the residence zone (54).

## Patentansprüche

1. Verfahren für die kontinuierliche Herstellung einer durch Feuchtigkeit härtbaren Zusammensetzung durch Durchleiten von Materialien umfassend ein Polyorganosiloxan mit mindestens einer Silanolendgruppe mit mindestens zwei Silanolgruppen pro Molekül, einen oder mehrere Silanvernetzer und einen Katalysator für die Härtungsreaktion, durch einen Schneckenextruder und Extrudieren der Zusammensetzung in Lagerbehälter, gekennzeichnet durch die Stufen, daß man

1) die Materialien kontinuierlich in eine erste Mischzone des Schneckenextruders einführt, um eine Mischung zu bilden,

2) die Mischung der Misch- und Transportwirkung der Schnecke des Schneckenextruders in der ersten Mischzone über einen solchen Zeitraum unterwirft, daß ein Vermischen der Inhaltsstoffe der Mischung bis zur Homogenität bewirkt wird und wobei überschüssiges Wasser entfernt wird,

3) die Mischung aus der ersten Mischzone durch eine Verweilzone, in der die Mischung nicht der Mischwirkung der Schnecke unterzogen wird, transportiert, wobei in der Verweilzone die Mischung über einen Zeitraum reagieren gelassen wird, und

4) die Mischung aus der Verweilzone durch eine zweite Mischzone des Extruders, die stromabwärts bezogen auf die erste Mischzone angeordnet ist, transportiert, wobei flüchtige Materialien aus der Mischung entfernt werden, um die Zusammensetzung zu bilden.

2. Verfahren nach Anspruch 1, weiter dadurch gekennzeichnet, daß die Verweilzeit der Mischung in der ersten Mischzone 1 bis 2 Minuten beträgt und/oder die Verweilzeit der Mischung in der Verweilzone 4 bis 15 Minuten beträgt und/oder die Verweilzeit der Mischung in der zweiten Mischzone 0,1 bis 0,3 Minuten beträgt.

3. Verfahren nach Anspruch 1, weiter dadurch gekennzeichnet, daß das Organosiloxan mit Silanolendgruppen die allgemeine Formel $HO(R_2SiO)_xH$ hat, worin jeder Rest R eine Kohlenwasserstoffgruppe mit bis zu 12 Kohlenstoffatomen bedeutet und x einen solchen Wert hat, daß das Polyorganosiloxan eine Viskosität im Bereich von 30 bis 1.000 poise hat, der Vernetzer ein Silan der Formel $R'_aR''_bSi$ ist, worin jeder Rest R' eine monovalente Kohlenwasserstoffgruppe bedeutet, jeder Rest R'' eine Hydroxy-, Alkoxy-, Alkoxyalkoxy- oder Oximogruppe bedeutet, $a + b = 4$, a einen Wert von 0 oder 1 hat und b einen Wert von 3 oder 4 hat.

4. Verfahren nach Anspruch 1, weiter dadurch gekennzeichnet, daß die Materialien der Zusammensetzung der Schneckenextrudervorrichtung in verschiedenen Strömen einzeln oder in Mischung mit anderen Inhaltsstoffen der Zusammensetzung zugeführt werden.

5. Verfahren nach Anspruch 4, weiter dadurch gekennzeichnet, daß ein erster Beschickungsstrom ein Polydimethylsiloxan mit Silanolendgruppen umfaßt, ein zweiter Beschickungsstrom feinverteiltes Calciumcarbonat umfaßt, ein dritter Beschickungsstrom ein flüssiges Fließkontrollmittel umfaßt, ein vierter Beschickungsstrom einen Weichmacher und das Polydimethylsiloxan mit Silanolendgruppen umfaßt und ein fünfter Beschickungsstrom das Härtungsmittel, den Katalysator und einen Haftvermittler umfaßt.

6. Entgasungsextruder geeignet für die kontinuierliche Herstellung einer durch Feuchtigkeit härtbaren Organosiloxanzusammensetzung, wobei der Extruder einen Zylinder mit ersten und zweiten Mischzonen (22, 34) umfaßt, wobei die erste Mischzone (22) mindestens eine Einlaßöffnung (24, 26, 28, 30, 32) enthält, durch die die Inhaltsstoffe der Zusammensetzung dem Zylinder zugeführt werden, und mindestens eine Entlüftungsöffnung (36, 38) zur Entfernung von überschüssigem Wasser, wobei die zweite Mischzone (34) stromabwärts bezogen auf die erste Mischzone (22) angeordnet ist und eine Entlüftungsöffnung (40) aufweist, durch die flüchtige Komponenten den Zylinder verlassen können und eine Auasgangsöffnung (42), durch die die Zusammensetzung aus dem Zylinder extrudiert wird, der Zylinder eine Schneckenvorrichtung (44, 46) enthält, die in dem Zylinder drehbar ist und Schneckengänge aufweist, die so angeordnet sind, daß die dem Zylinder zugeführten Inhaltsstoffe vermischt werden und die Mischung durch den Zylinder transportiert wird, dadurch gekennzeichnet, daß der Extruder mit einer Verweilzone (54), die außerhalb des Zylinders ist und den einzigen Durchgang zum Transport der Inhaltsstoffe der Zusammensetzung aus der ersten (22) zu der zweiten (34) Mischzone liefert, bereitgestellt wird, wobei die Inhaltsstoffe durch die Verweilzone (54) in die zweite Mischzone (34) zur Extrusion mit Hilfe einer Schneckenvorrichtung (44, 46) transportiert werden.

7. Vorrichtung nach Anspruch 6, weiter dadurch gekennzeichnet, daß die Schneckenvorrichtung (44, 46) eine Doppelschnecke mit zwei vollständig ineinandergreifenden gleichsinnigen Schnecken, die parallel zueinander in dem Zylinder angeordnet sind, umfaßt.

8. Vorrichtung nach Anspruch 6, weiter dadurch gekennzeichnet, daß die Verweilzone (54) ein Rohr umfaßt, das mit dem Inneren des Zylinders verbunden ist und die erste Mischzone (22) mit der zweiten Mischzone (34) stromaufwärts bezogen auf die Entlüftungsvorrichtung (40) in der zweiten Mischzone (34) verbindet.

**9.** Vorrichtung nach Anspruch 6 weiter umfassend eine Pumpeinrichtung (56), um die Strömung der Zusammensetzung durch die Verweilzone (54) zu fördern.

## Revendications

**1.** Un procédé pour la préparation en continu d'une composition durcissable par l'humidité par envoi de matières comprenant au moins un polyorganosiloxane terminé par des groupes silanols qui compte au moins deux groupes silanols par molécule, un ou plusieurs agents de réticulation silanes et un catalyseur pour la réaction de durcissement dans une boudineuse à vis et extrusion de la composition dans des récipients de stockage, caractérisé par les opérations consistant :

> 1) à introduire en continu lesdites matières dans une première zone de mélange de la boudineuse à vis, pour former un mélange,
> 2) à soumettre le mélange à l'effet de mélange et de transport de la vis de la boudineuse dans ladite première zone de mélange pendant une durée propre à assurer le mélange des ingrédients dudit mélange jusqu'à homogénéité, avec élimination de l'eau en excès,
> 3) à transporter ledit mélange depuis ladite première zone de mélange en lui faisant traverser une zone de séjour dans laquelle le mélange n'est pas soumis à l'action mélangeuse de ladite vis, zone de séjour dans laquelle ledit mélange est laissé réagir pendant un certain intervalle de temps, et
> 4) à transporter ledit mélange depuis ladite zone de séjour en lui faisant traverser une deuxième zone de mélange de ladite boudineuse située en aval par rapport à ladite première zone de mélange, pour y débarrasser le mélange des matières volatiles et former ainsi ladite composition.

**2.** Un procédé selon la revendication 1 caractérisé en outre en ce que le temps de séjour dudit mélange dans ladite première zone de mélange est de 1 à 2 minutes, et/ou le temps de séjour dudit mélange dans ladite zone de séjour est de 4 à 15 minutes, et/ou le temps de séjour dudit mélange dans ladite deuxième zone de mélange est de 0,1 à 0,3 minute.

**3.** Un procédé selon la revendication 1 caractérisé en outre en ce que l'organosiloxane terminé par des groupes silanols répond à la formule générale $HO(R_2SiO)_xH$, où chaque R représente un groupe hydrocarboné comptant jusqu'à 12 atomes de carbone et $\underline{x}$ a une valeur telle que la viscosité du polyorganosiloxane se situe dans l'intervalle de 30 à 1000 poises, l'agent de réticulation est un silane de formule $R'_aR''_bSi$, où chaque R' représente un groupe hydrocarboné monovalent, chaque R'' représente un groupe hydroxy, alcoxy, alcoxyalcoxy ou oximo, $\underline{a} + \underline{b} = 4$, $\underline{a}$ a pour valeur 0 ou 1 et $\underline{b}$ a pour valeur 3 ou 4.

**4.** Un procédé selon la revendication 1 caractérisé en outre en ce que les matières de la composition sont délivrées à la boudineuse à vis en plusieurs flux individuellement ou en admixtion avec d'autres ingrédients de la composition.

**5.** Un procédé selon la revendication 4 caractérisé en outre en ce qu'un premier flux d'alimentation comprend un polydiméthylsiloxane terminé par des groupes silanols, un deuxième flux d'alimentation comprend du carbonate de calcium finement divisé, un troisième flux d'alimentation comprend un agent de réglage rhéologique liquide, un quatrième flux d'alimentation comprend un agent plastifiant et ledit polydiméthylsiloxane terminé par des groupes silanols et un cinquième flux d'alimentation comprend l'agent durcisseur, le catalyseur et un activateur d'adhérence.

**6.** Une boudineuse de dévolatilisation se prêtant à la production en continu d'une composition d'organosiloxane durcissable par l'humidité, ladite boudineuse comprenant un cylindre comportant une première et une deuxième zones de mélange (22, 32), où ladite première zone de mélange (22) contient au moins un orifice d'entrée (24, 26, 28, 30, 32) par lequel des ingrédients de la composition sont délivrés dans le cylindre et au moins un moyen d'échappement (30, 35) pour l'évacuation de l'eau en excès, ladite deuxième zone de mélange (34) est située en aval de ladite première zone de mélange (22), contient des moyens d'échappement (40) par lesquels des composants volatils peuvent quitter ledit cylindre et un orifice de sortie (42) à travers lequel la composition est extrudée hors du cylindre, le cylindre contient un dispositif à vis (44, 46) qui peut tourner à l'intérieur du cylindre et présente des rampes hélicoïdales agencées de manière à mélanger les ingrédients alimentant le cylindre et à transporter le mélange en lui faisant traverser le cylindre, caractérisée en ce qu'elle est munie d'une zone de séjour (54) qui est exterieure audit cylindre et fournit le seul conduit pour transporter les ingrédients de ladite composition de ladite première zone de mélange (22) à ladite deuxième zone de mélange (32), en permettant ainsi auxdits ingrédients de traverser la zone de séjour (54) en étant transportés à ladite deuxième zone de mélange (32) pour en être refoulés par extrusion au moyen dudit dispositif à vis (44, 46).

**7.** Dispositif selon la revendication 6 caractérisé en outre en ce que le dispositif à vis (44, 46) comprend une vis double comportant deux vis jumelles corotatives à engrènement complet montées parallèlement l'une à l'autre dans le cylindre.

8. Dispositif selon la revendication 6 caractérisé en outre en ce que la zone de séjour (54) comprend un tube communiquant avec l'intérieur du cylindre et reliant ladite première zone de mélange (22) à ladite deuxième zone de mélange (34) en amont desdits moyens d'échappement (40) dans ladite deuxième zone de mélange (34).

9. Dispositif selon la revendication 6 comprenant en outre des moyens de pompage (56) pour aider l'écoulement de la composition à travers la zone de séjour (54).

Fig - 1

Fig. 2